Europäisches Patentamt

European Patent Office

Office européen des brevets

(11) Publication number: **0 063 499**
**B1**

## (12) EUROPEAN PATENT SPECIFICATION

(45) Date of publication of patent specification: **11.09.85**

(21) Application number: **82302070.6**

(22) Date of filing: **22.04.82**

(51) Int. Cl.⁴: **G 11 B 17/04, G 11 B 17/02**

54 **Magnetic disk drive having a movable drive motor.**

(30) Priority: **22.04.81 US 256594**

(43) Date of publication of application:
**27.10.82 Bulletin 82/43**

(45) Publication of the grant of the patent:
**11.09.85 Bulletin 85/37**

(84) Designated Contracting States:
**BE CH DE FR GB IT LI NL SE**

(56) References cited:
**FR-A-2 309 012**
**FR-A-2 460 024**
**US-A-3 529 301**
**US-A-3 593 327**
**US-A-3 678 481**
**US-A-3 815 150**
**US-A-3 940 793**
**US-A-3 975 768**
**US-A-3 990 111**
**US-A-4 125 883**

**IBM TECHNICAL DISCLOSURE BULLETIN, vol. 20, no. 11A, April 1978. NEW YORK (US) M. W. J. CARMICHAEL et al: "Disk drive for interchangeable flexible disk cartridges**

(73) Proprietor: **IOMEGA CORPORATION**
**4646 South 15000 West**
**Ogden Utah 84403 (US)**

(72) Inventor: **Bauck, Randall C.**
**1256 East 800 North**
**Layton Utah 84041 (US)**
Inventor: **Kleczkowski, Peter S.**
**2571 South 1825 East**
**Ogden Utah 84401 (US)**
Inventor: **Radman, Anton J.**
**1820 East 5725 South**
**Ogden Utah (US)**

(74) Representative: **Lloyd, Barry George William et al**
**Reddie & Grose 16 Theobalds Road**
**London WC1X 8PL (GB)**

Courier Press, Leamington Spa, England.

## Description

This invention relates to a magnetic disk drive for writing and reading data to and from a magnetic disk contained in a cartridge which is inserted through an opening into the disk drive, comprising a motor having a spindle for engaging the magnetic disk to rotate it, and means whereby relative motion between the cartridge and the motor can be effected such that the motor spindle can be moved out of engagement with or into engagement with the magnetic disk drive.

Recently, magnetic disk drives which write and read digital data from flexible magnetic disks have been extensively used. These are frequently referred to as "floppy disks" and "floppy disk drives". These drives have been extensively used for small, so-called microcomputer systems, for word processing applications and the like.

In order to rotate the flexible magnetic disk in read/write relationship with a magnetic recording head, a rotatable spindle must engage the centre of the disk and disengage the disk when the operation has been completed. Floppy disk drives typically force and hold the disk centre onto a fixed rotatable spindle by use of a clamp which comes from the back side of the disk. Since the actual drive spindle is fixed from translating, the critical dimensions from the hub centre and hub height with respect to the recording head are fixed. However, this approach requires that the disk cartridge has an opening through which the clamp contacts and moves the medium. The typical floppy disk cartridge exposes certain areas of the disk recording surface to dust contamination, liquid spillage, fingerprints and scratching. Examples of floppy disk drives are shown in US Patents 3,990,111 (Elliot), 3,678,481 (Dalziel et al), 3,810,150 (Stoddard et al) 4,125,883 (Rolph), and 4,089,029 (Castrodale et al).

FR—A—2 460 024 describes a disk drive in which a vertical drive shaft adapted to engage and drive a flexible magnetic disk is moved vertically out of and into engagement with the disk. A separate motor is provided for effecting the vertical movement of the drive shaft.

US—A—3 975 768 describes a disk drive in which a vertical drive shaft is coupled to or uncoupled from a hub on a flexible magnetic disk by a clutch arrangement which is manually controlled and allows insertion of a cartridge carrying the disk. The drive shaft is driven through a belt and pulley arrangement.

US—A—3 593 327 describes a disk drive in which a cartridge carrying a disk is inserted into a pivoted frame in the drive. The frame can be rotated so that a magnetic chuck carried by a drive motor can engage the magnetic disk. A door normally closes an opening through which the cartridge is inserted and removed, the door being openable only when control circuitry permits.

None of the prior art arrangements provides a simple but reliable and accurate mechanism ensuring proper engagement and disengagement of a magnetic disk contained in a cartridge which is inserted into and withdrawn from a magnetic disk drive.

According to the present invention, a magnetic disk drive of the type defined hereinbefore is characterised in that the means whereby relative motion between the cartridge and the motor can be effected includes a yoke which is rotatable about a pivot in the disk drive, rotation of the yoke about the pivot in one direction moving the spindle out of engagement with the disk, and rotation of the yoke about the pivot in the opposite direction moving the spindle into engagement with the disk and that the motor is movably connected to the yoke, and means are provided for guiding the motor to approach and withdraw from the disk in a linear movement.

Preferably, the yoke is pivoted on a disk drive casting or base on which a magnetic read/write head actuator is mounted. To allow the critical dimensions from a disk hub centre to the actuator and the disk hub height with respect to a Bernoulli surface to be maintained, the motor has a movable connection with the yoke. The motor can be guided by reference surfaces in the case so that it moves linearly into engagement with the disk without sweeping an arc. Further maintenance of critical dimensions can be obtained by three reference pads which set the height of the motor spindle with respect to the hub of the disk.

One embodiment of the invention will now be described with reference to the accompanying drawings, in which:

Fig. 1 is a front perspective view of the disk drive of this invention;

Fig. 2 is a cut-away view of the motor spindle and the disk;

Fig. 3 shows the motor spindle, Bernoulli plate, and disk;

Fig. 4 shows the yoke and motor spindle;

Fig. 5 shows the base casting; and

Fig. 6 shows the actuator for the magnetic recording heads.

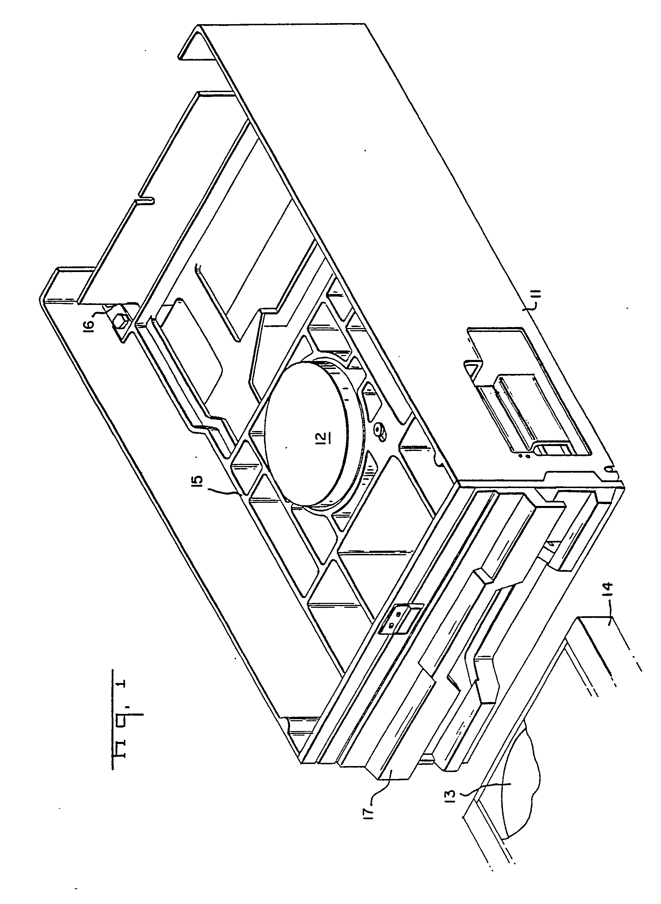

In Fig. 1, a magnetic disk drive 11 includes a motor 12 for rotating a magnetic disk 13 which is contained in a cartridge 14. The motor is mounted on a yoke 15 which is pivoted at 16 on the base casting.

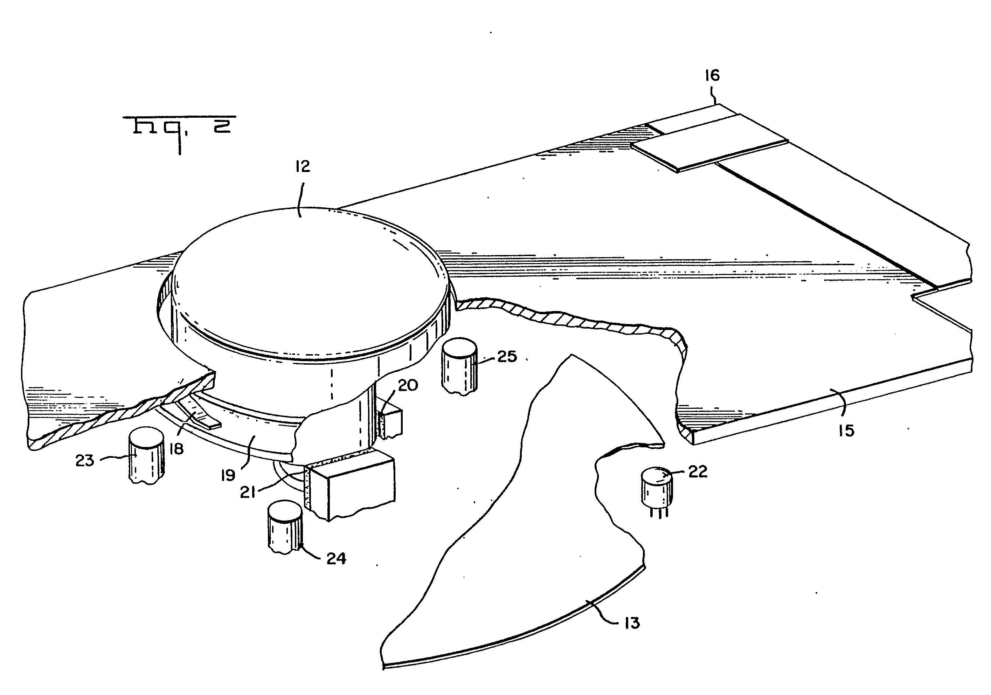

A closure member, bezel member 17 is mounted on the end of the yoke. Normally, the bezel member closes the opening through which the cartridge 14 is inserted into the disk drive. When the operator moves the bezel member 17 out of the opening, in order to insert the cartridge, the yoke is rotated about the pivot point 16. This moves the motor 12 out of the position in which the motor spindle will engage the magnetic disk. However, it is desirable that the motor not be allowed to sweep through an arc, as it would if it were rigidly attached to the yoke. Therefore, motor has a movable connection to the yoke. This is better shown in Fig. 2 wherein a suspension spring 18 (and one or more other similar springs) are connected between a flange 19 on the motor 13 and the yoke 15. After the cartridge has been inserted, the operator moves the bezel member 17 toward its closed position. This rotates the yoke 15 about its pivot in a direction which moves the motor spindle toward the magnetic disk 13. Reference surfaces 20 and 21 in the base casting guide the motor, by movement of the motor with respect to the yoke, in a linear movement. This assures that the motor does not sweep in an arc, but rather, moves linearly being guided by the "V" formed by the two reference surfaces 20 and 21. These surfaces maintain the relationship of the motor 12 to the magnetic disk 13 in two of the three dimensional planes. The reference surfaces 20 and 21 are preferably covered with an antifriction material to allow easy sliding parallel to the planes of these surfaces.

This engagement of the motor spindle with the disk is accomplished by moving the motor hub to a point near the disk hub. The final position of this movement is set by three reference pads 23, 24 and 25 on the base casting. The motor flange 19 engages these reference pads 23—25 to accurately position the height of the motor spindle 12a with respect to the hub 28 of the disk 13. The suspension springs 18 which attach the motor 12 to the yoke 15 allow for over-travel or under-travel of the yoke with respect to the three pads 23—25, thereby eliminating the need for costly, tight tolerance.

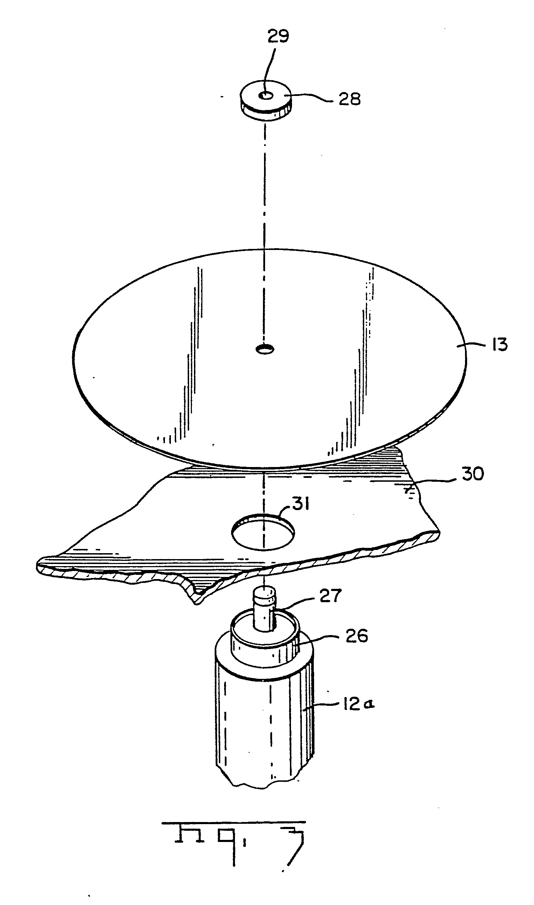

Referring to Fig. 3, the motor spindle 12a has a magnetic hub 26 and a shaft extension 27. Magnetic disk 13 has a ferrous hub 28 with a precision bore 29 therein. When the motor spindle 12a is moved into proximity to the disk 13, the ferrous hub is magnetically attracted to the magnetic hub 26, thereby magnetically coupling the motor and the disk.

The disk 13 is positioned in proximity to a Bernoulli plate 30 which is fixed in the drive. The disk is rotated adjacent to the Bernoulli plate 30 by the motor 12. The Bernoulli plate 30 is between the disk 13 and the motor 12. Access of the motor of the disk is provided through a hole 31 in the Bernoulli plate 30. When the yoke is rotated to move the motor away from the disk, the magnetic hub is pulled through the hole 31 to disengage the motor from the disk. The disk hub 28 with the disk is left behind to be removed inside the protective magnetic disk cartridge 14 from the drive.

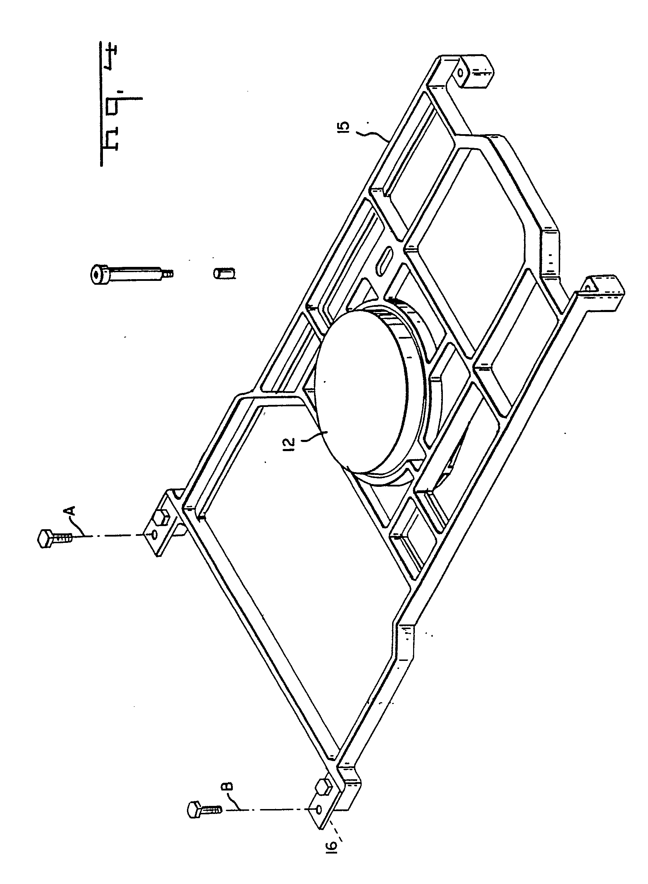

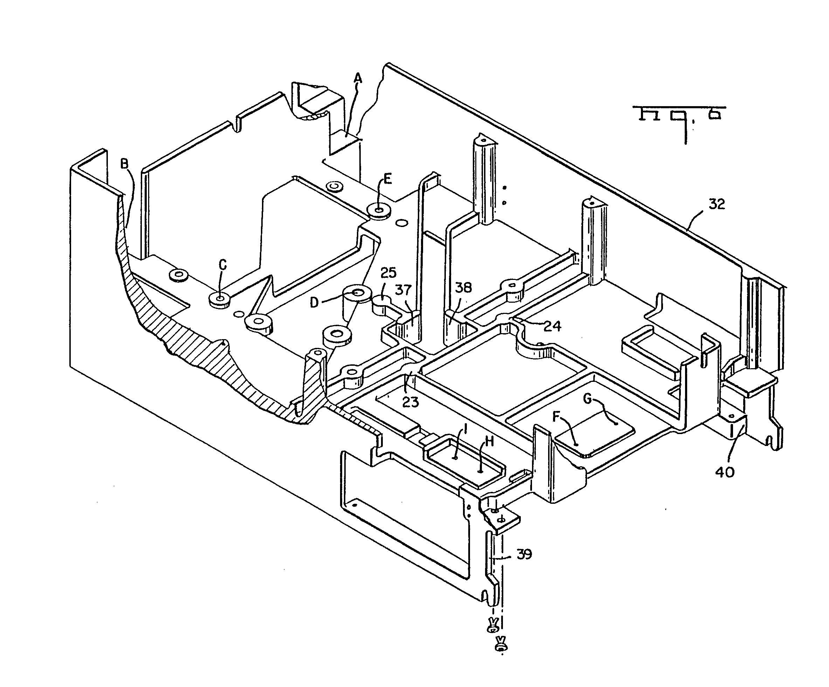

The relationship between the pivoted yoke 15, magnetic read/write head actuator 33, and base casting 32 are shown in Figs. 4 to 6. The letters designate the centre lines of the mounting holes in the base casting of Fig. 6. Fig. 4 shows the yoke 15 which is pivoted at 16 in the base casting 32 of Fig. 6.

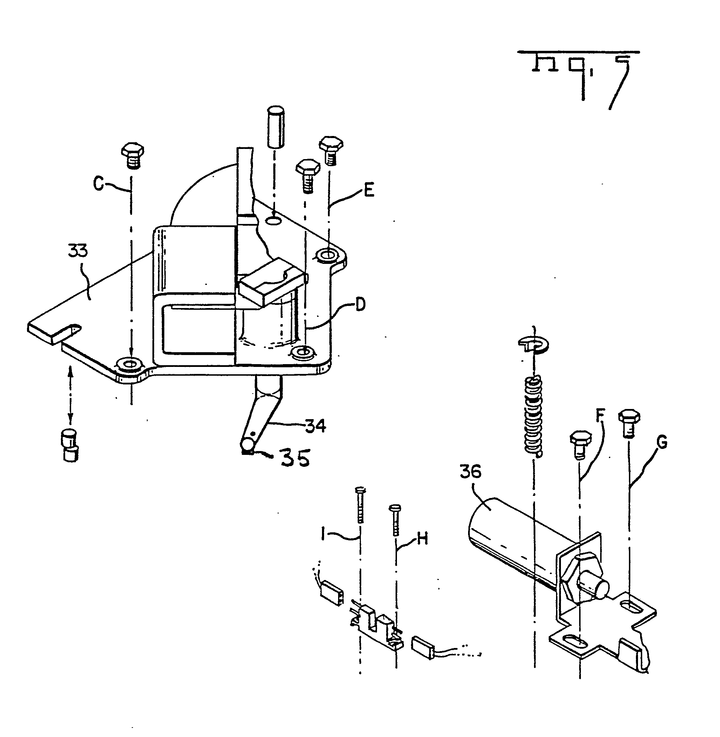

Fig. 5 shows the actuator 33 which is fixed in the base casting 32. The actuator 33 has an arm 34. This carries the magnetic read/write head 35 into read/write relationship with the magnetic disk. Arm 34 traverses an arcuate path in the manner of a photograph arm to couple the head to the disk surface.

Fig. 5 also shows a latch solenoid 36 which holds the yoke in the closed position.

Fig. 6 shows the base casting 32 which has the reference pads 23—25 which set the height of the motor with respect to the magnetic head carried by the actuator. The reference surfaces 20 and 21 (Fig. 2) are positioned along the surfaces 37 and 38 in Fig. 6. These reference surfaces guide the motor spindle as it moves into engagement with the disk. The Bernoulli plate 30 of Fig. 3 is mounted on the opposite side of the casting 32 from that shown in Fig. 6. The cartridge is inserted between the points 39 and 40 on the casting. Guide tracks guide the cartridge with respect to the casting.

The disk drive described permits engagement of the magnetic disk with both a drive motor and a recording head from the same side of the disk, for example, through a common opening in the disk cartridge. It may, for example, be used with rigid disk cartridges of the type described in our copending European patent application EP—A—0 063 500, allowing the single opening in the cartridge to be closed by a slider or the like when the cartridge is not in the disk drive, thereby eliminating a potential source of contamination.

## Claims

1. A magnetic disk drive for writing and reading data to and from a magnetic disk (13) contained in a cartridge (14) which is inserted through an opening into the disk drive, comprising a motor (12) having a spindle (12a) for engaging the magnetic disk (13) to rotate it, and means (15, 16, 17) whereby relative motion between the cartridge and the motor (12) can be effected such that the motor spindle (12a) can be moved out of engagement with or into engagement with the magnetic disk (13), characterised in that the said means includes a yoke (15) which is rotatable about a pivot (16) in the disk drive (12), rotation of the yoke (15) about the pivot (16) in one direction moving the spindle (12a) out of engagement with the disk (13), and rotation of the yoke (15) about the pivot (16) in the opposite direction moving the spindle (12a) into engagement with the disk (13) and that the motor (12) is movably connected to the yoke (15), and means (20, 21) are provided for guiding the motor (12) to approach and withdraw from the disk (13) in a linear movement.

2. A magnetic disk drive according to claim 1, characterised in that the motor (12) is movably connected to the yoke (15) by suspension springs (18).

3. A magnetic disk drive according to claim 1 or 2, characterised in that the said means (20, 21) comprise reference surfaces (37, 38) provided on a base member (32).

4. A magnetic disk drive according to claim 3, characterised in that the reference pads (23, 24, 25) are provided on the base member (32) to determine a limiting position for the motor (12).

5. A magnetic disk drive according to any preceding claim, characterised in that an actuator (33) is provided which carries a magnetic read/write head (35) into read/write relationship with the disk (13) with the head (35) at the same side of the disk (13) as the motor (12).

6. A magnetic disk drive according to any preceding claim, characterised in that a Bernoulli plate (30) is provided to lie between the disk (13) and the motor (12) and has a hole (31) through which engagement means (26, 27) on the spindle (12a) pass when engaging with or disengaging from the disk (13).

7. A magnetic disk drive according to any preceding claim, characterised in that the yoke (15) has a bezel member (17) at its free end, the bezel member (17) normally closing the said opening, rotation of the yoke (15) in the said one direction moving the bezel member (17) out of the said opening, and rotation of the yoke (15) in the said opposite direction moving the bezel member (17) into the said opening.

## Patentansprüche

1. Magnetplattenantrieb zum Schreiben und Lesen von Daten auf und von einer Magnetplatte (13), die in einer Kassette (14) enthalten ist, die durch eine Öffnung in den Plattenantrieb eingeführt wird, mit einem Motor (12) mit einer Spindel (12a) zum Eingriff in die Magnetplatte (13) zu deren Antrieb, und mit Einrichtungen (15, 16, 17), durch die eine relative Bewegung zwischen der Kassette und dem Motor (12) derart bewirkt werden kann, daß die Motorspindel (12a) ausser oder in Eingriff mit der Magnetplatte (13) bewegt werden kann, dadurch gekennzeichnet, daß die Einrichtung ein um ein Gelenk (16) im Plattenantrieb (12) drehbares Joch (15) enthält, durch dessen Drehung um das Gelenk (16) in einer Richtung die Spindel (12a) außer Eingriff mit der Platte (13) und durch dessen Drehung um das Gelenk (16) in der Gegenrichtung die Spindel (12a) in Eingriff mit der Platte (13) bewegt wird, und daß der Motor (12) beweglich mit dem Joch (15) verbunden ist und Einrichtungen (20, 21) zum Führen des Motors (12) derart vorgesehen sind, daß er sich in einer linearen Bewegung an die Platte (13) annähert und von ihr weggezogen wird.

2. Magnetplattenantrieb nach Anspruch 1, dadurch gekennzeichnet, daß der Motor (12) mittels Aufhängefedern (18) beweglich mit dem Joch (15) verbunden ist.

3. Magnetplattenantrieb nach Anspruch 1 oder 2, dadurch gekennzeichnet, daß die Einrichtungen (20, 21) auf einem Basisteil (32) vorgesehene Bezugsflächen (37, 38) umfassen.

4. Magnetplattenantrieb nach Anspruch 3, dadurch gekennzeichnet, daß die Bezugsanschläge (23, 24, 25) auf dem Basisteil (32) zur Bestimmung einer Grenzstellung für den Motor (12) vorgesehen sind.

5. Magnetplattenantrieb nach einem der vorstehenden Ansprüche, gekennzeichnet durch ein Betätigungsglied (33), das einen Lese-/Schreib-Magnetkopf (35) in Schreib/Lesebeziehung zur Platte (13) mit dem Kopf (35) auf der Seite der Platte (13) trägt, auf der der Motor (12) angeordnet ist.

6. Magnetplattenantrieb nach einem der vorstehenden Ansprüche, gekennzeichnet durch eine zwischen der Platte (13) und dem Motor (12) angeordnete Bernoulli-Platte (30), die mit einer Öffnung (31) versehen ist, durch die Eingriffseinrichtungen (26, 27) auf der Spindel (12a) beim In-Eingriff- oder Außer-Eingriff-Bringen mit bzw. von der Platte (13) hindurchtreten.

7. Magnetplattenantrieb nach einem der vorstehenden Ansprüche, gekennzeichnet durch ein am freien Ende des Joches (15) angeordnetes Abdeckteil (17), das die Öffnung normalerweise verschließt, wobei eine Drehung des Joches (15) in der einen Richtung das Abdeckteil (17) aus der Öffnung heraus und eine Drehung des Joches in der Gegenrichtung das Abdeckteil (17) in die Öffnung bewegt.

## Revendications

1. Un appareil d'entraînement de disque magnétique pour l'écriture et la lecture de données sur un disque magnétique (13) contenu dans cartouche (14) qui est insérée par l'intermédiaire d'une ouverture dans l'appareil à disque comprenant un moteur (12) pourvu d'une broche (12a) s'accouplant avec le disque magnétique (13) pour le faire tourner, et des moyens (15, 16, 17) pour produire un mouvement relatif entre la cartouche et le moteur (12) de telle sorte que la broche (12a) du moteur puisse être accouplée avec ou désaccouplée du disque magnétique (13), caractérisé en ce que lesdits moyens comprennent un étrier (15) qui peut tourner autour d'un pivot (16) de l'appareil à disque (12), une rotation de l'étrier (15) autour du pivot (16) dans une direction déplaçant la broche (12a) pour la désaccoupler du disque (13) et une rotation de l'etrier (15) autour du pivot (16) dans la direction opposée déplaçant la broche (12a) pour l'accoupler avec le disque (13), et en ce que le moteur (12) est relié de façon mobile à l'étrier (15) et des moyens (20, 21) sont prévus pour guider le moteur (12) afin qu'il se rapproche et s'éloigne du disque (13) dans un mouvement linéaire.

2. Appareil d'entraînement de disque magnétique selon la revendication 1, caractérisé en ce que le moteur (12) est relié de façon mobile à l'étrier (15) par des ressorts de suspension (18).

3. Appareil d'entraînement de disque magnétique selon la revendication 1 ou 2, caractérisé en ce que lesdits moyens (20, 21) comprennent des surfaces de référence (37, 38) prévus sur un élément de base (32).

4. Appareil d'entraînement de disque magnétique selon la revendication 3, caractérisé en ce que les bossages de référence (23, 24, 25) sont prévus sur l'élément de base (32) pour déterminer une position limite pour le moteur (12).

5. Appareil d'entraînement de disque magnétique selon une des revendications précédentes, caractérisé en ce qu'il est prévu un organe d'actionnement (33) qui porte une tête magnétique de lecture/écriture (35) pour l'amener dans une relation de lecture/écriture d'un disque (13), avec la tête (35) placée sur le même côté du disque (13) que le moteur (12).

6. Appareil d'entraînement de disque magnétique selon une quelconque des revendications précédentes, caractérisé en ce qu'il est prévu une plaque de Bernoulli (30) placée entre le disque (13) et le moteur (12) et comportant un trou (31) dans lequel passent des moyens d'accouplement (26, 27) prévus sur la broche (12a) lors d'un accouplement ou d'un désaccouplement avec le disque (13).

7. Appareil d'entraînement de disque magnétique selon une quelconque des revendications précédentes, caractérisé en ce que l'étrier (15) comporte un élément décoratif (17) à son extremité libre, cet élément décoratif (17) fermant normalement ladite ouverture, une rotation de l'étrier (15) dans ladite direction déplaçant l'élement décoratif (17) pour l'écarter de ladite ouverture alors qu'une rotation de l'étrier (15) dans ladite direction opposée déplace l'élément décoratif (17) jusque sur ladite ouverture.

Fig. 1

Fig. 2

Fig. 7

Fig. 4

0 063 499

Fig. 5

Fig. 6